# EUROPÄISCHE PATENTSCHRIFT

(11) **EP 0 932 473 B1**
(45) Veröffentlichungstag und Bekanntmachung des Hinweises auf die Patenterteilung: **08.01.2003**
(21) Anmeldenummer: 98945274.3
(22) Anmeldetag: 20.08.1998
(51) Int. Cl.: B23K 3/02, B23K 3/03

(54) **BEFESTIGUNGSVORRICHTUNG FÜR EINE LÖTVORRICHTUNG**
FIXING DEVICE FOR A SOLDERING DEVICE
DISPOSITIF DE FIXATION POUR OUTILS DE BRASAGE

(30) Priorität: 20.08.1997 DE 29714929 U
(43) Veröffentlichungstag der Anmeldung: 04.08.1999
(73) Patentinhaber: Cooper Tools GmbH, 74354 Besigheim (DE)
(72) Erfinder: EISELE, Ernst, D-74399 Walheim (DE)
(74) Vertreter: Grünecker, Kinkeldey, Stockmair & Schwanhäusser Anwaltssozietät
(86) Internationale Anmeldenummer: EP9805312
(87) Internationale Veröffentlichungsnummer: WO99008824

(56) Entgegenhaltungen:
- GB-A- 646 139
- US-A- 3 919 524

## Beschreibung

Die Erfindung betrifft eine Lötvorrichtung mit einer Lötspitze sowie Mitteln zur Befestigung der Lötspitze an der Lötvorrichtung, wobei die Lötspitze ein vorderes Arbeitsende und ein diesem gegenüberliegendes, hinteres Befestigungsende sowie die Lötvorrichtung ein Anschlußende zur Befestigung des Befestigungsendes aufweist, wobei an wenigstens einem Ende ein rotatiationssymmetrischer Abschnitt angeordnet ist.

Eine solche Lötvorrichtung ist beispielsweise aus der EP 132569 bekannt. Dort wird das hintere Befestigungsende der Lötspitze reibschlüssig in eine Aufnahme des Anschlussendes eingestreckt, wozu die Lötspitze mit ihrem Befestigungsende in eine entsprechende ausgewählte Aufnahmebohrung eingepresst werden muss, wodurch die Befestigung der Lötspitze erfolgt.

Eine weitere solche Lötvorrichtung ist aus der GB-A-646129 bekannt, die als nächstliegender Stand der Technik angesehen wird. Bei dieser wird eine elektrische Lötvorrichtung mit einem elektrisch beheizten Kopf mit einer Lötspitze verbunden, welche einen im Wesentlichen zylindrischen Endbereich aufweist, der in eine entsprechende Aufnahmebohrung des Kopfes eingesteckt wird. Der Kopf weist einen kreisförmigen, zylindrischen Rand auf, der exzentrisch zur Aufnahmebohrung angeordnet ist. Ein freier Ringkragen mit einer scheibenähnlichen Basis weist einen zylindrischen Flansch auf, der über den kreisförmigen Rand passt und eine Öffnung mit gleicher Größe und gleicher Exzentrizität wie die Öffnung im Kopf ausgebildet ist. Um die Lötspitze freizugeben, muss der Ringkragen gedreht werden, wodurch sowohl die Lötspitze als auch der Bund gelöst, beziehungsweise bei Drehung in umgekehrter Richtung befestigt werden.

Aus der DE 2657569 ist eine Lötvorrichtung bekannt, bei der das hintere Befestigungsende mit einem Außengewinde ausgebildet ist. Dies wird in eine Aufnahme mit entsprechendem Innengewinde eingeschraubt und so die Lötspitze an der Lötvorrichtung befestigt.

Weiterhin ist aus der DE 29600771 eine hülsenförmige Spitzenhalterung bekannt, die ein Befestigungsende einer Lötspitze aufnimmt. Beim Anschrauben der Spitzenhalterung an der Lötvorrichtung wird die Lötspitze ebenfalls befestigt, da die Spitzenhalterung die Lötspitze mit einem konisch sich verengenden Öffnungsrand an beispielsweise einer Heizeinrichtung andrückt.

Ausgehend von der GB-A-646139 liegt der Erfindung die Aufgabe zugrunde, In konstruktiv einfacher Weise eine sichere und einfach lösbare Befestigung einer Lötspitze an einer Lötvorrichtung zu ermöglichen.

Diese Aufgabe wird durch eine Lötvorrichtung nach Anspruch 1 gelöst, wobei ein Ende einen Konusabschnitt aufweist, welcher mit einem zumindest stellenweise in Umfangsrichtung angeordneten Außenkonus ausgebildet ist, der exzentrisch zum rotationssymmetrischen Abschnitt angeordnet ist, wobei das andere Ende mit einem Innenkonus ausgebildet ist, in welchem der Außenkonus zwischen einer Einsteckstellung und einer Befestigungsstellung drehbar gelagert ist.

Beim Anmeldungsgegenstand ist ein Gewinde zur einfachen und lösbaren Befestigung der Lötspitze nicht erforderlich. Weiterhin muß die Lötspitze nicht in die Aufnahme zur reibschlüssigen Befestigung eingepreßt werden. Durch das Zusammenwirken von Außenkonus und Innenkonus ist in der Regel eine Drehung von weniger als 180° erforderlich, um die Lötspitze von ihrer Einsteckstellung in die Befestigungsstellung relativ zur Aufnahme zu drehen. Gleichzeitig ist der rotationssymmetrische Abschnitt an einem Ende vom jeweils anderen Ende aufgenommen, so daß sich eine gute Wärmeübertragung von einer Heizeinrichtung der Lötvorrichtung ergibt Innen- und Außenkonus sind einfach und preisgünstig herstellbar. Gegenüber einer eingepreßten Lötspitze nach dem Stand der Technik wird das Lösen der Lötspitze durch entsprechendes Drehen aus der Befestigungsstellung in die Einsteckstellung vereinfacht.

Bevorzugt ist der rotationssymmetrische Abschnitt im wesentlichen zylindrisch ausgebildet.

Bei dem vorangehenden Ausführungsbeispiel kann beispielsweise die Lötspitze an ihrem hinteren Befestigungsende rohrförmig ausgebildet sein und das Anschlußende der Lötvorrichtung aufnehmen, wobei der Außenkonus am Anschlußende und der Innenkonus am Befestigungsende ausgebildet sind. Zur leichteren Handhabung und Herstellung der Lötspitze kann allerdings das Befestigungsende den zylindrischen Abschnitt und den Außenkonus aufweisen, wobei sich der Außenkonus konusförmig in Richtung Arbeitsende verengt, und das Anschlußende als Aufnahme zum Einstecken des Einsteckendes und mit dem Innenkonus ausgebildet sein, welcher sich konusförmig in Richtung Lötspitze verengt.

Um die Lagerung der Lötspitze in der Aufnahme weiterhin zu verbessern, weist diese einen im wesentlichen zylindrischen Aufnahmeabschnitt auf, der komplementär zum zylindrischen Abschnitt des Einsteckendes der Lötspitze ausgebildet sein kann. Relativ zu diesen zylindrischen Abschnitten können Außenkonus und Innenkonus an entsprechender Stelle, wie beispielsweise einem bezogen auf die Lötspitze jeweils hinteren Ende der zylindrischen Abschnitte angeordnet sein. Bei einer solchen Anordnung würde der Außenkonus einen maximalen Durchmesser aufweisen, der geringer als ein Innendurchmesser des zylindrischen Aufnahmeabschnitts ist. Nach Durchschieben des Außenkonus durch den zylindrischen Aufnahmeabschnitt würde dieser in den Innenkonus eingesteckt und dort durch Verdrehen in die Befestigungsstellung befestigt.

Bei einem anderen Ausführungsbeispiel können Außenkonus und Innenkonus jeweils in Richtung Arbeitsende bzw. Lötspitze vor dem jeweiligen zylindrischen Abschnitt von Einsteckende und Aufnahme angeordnet sein. In diesem Fall hätte der Innenkonus einen minimalen Durchmesser, der größer oder gleich dem Außendurchmesser des zylindrischen Abschnitts des Einsteckendes ist Dabei würde der zylindrische Abschnitt durch den Innenkonus bis in den zylindrischen Aufnahmeabschnitt der Aufnahme eingesteckt.

Der rotationssymmetrische, beziehungsweise im wesentlichen zylindrische Abschnitt und der hierzu komplementär ausgebildete Aufnahmeabschnitt können auch konisch ausgebildet sein. Der Abschnitt verläuft dabei konusförmig verjüngt in Richtung Aufnahmeabschnitt und letzterer ist konisch erweitert in Richtung des Abschnitts am Befestigungsende der Lötspitze. Durch diese konische Ausbildung kann sowohl die Dichtheit als auch die Wärmeübertragung verbessert werden. Weiterhin läßt sich die Lötspitze leichter aus der Aufnahme herausziehen, da sich konusförmige Abschnitte auch im verschmutzten Zustand besser lösen als rein zylindrische Abschnitte.

Der Außenkonus kann auch nur stellenweise entlang des Umfangs des Konusabschnitts ausgebildet sein, wobei dieser Abschnitt ansonsten entsprechend zum zylindrischen Abschnitt ausgebildet sein kann. Um eine verbesserte Wärmeübertragung insbesondere im Bereich des Außenkonus zu ermöglichen, kann dieser in Umfangsrichtung durchgehend als umlaufendes Konusband ausgebildet sein. Ein solches Konusband ist in der Regel einfacher herstellbar als ein nur abschnittsweise ausgebildeter Außenkonus.

Zur weiteren Vereinfachung der Herstellung, zur erleichterten Handhabung beim Befestigen der Lötspitze und zur besseren Wärmeübertragung können Innenkonus und Außenkonus entlang ihres Umfangs gleich in Richtung Arbeitsende der Lötspitze geneigt sein. Auf diese Weise ergibt sich eine gute relative Drehbarkeit und eine verbesserte Anlage von Außenkonus und Innenkonus.

Bei einem einfachen Ausführungsbeispiel können Innenkonus und Außenkonus im wesentlichen kegelstumpfförmig ausgebildet sein. Dabei bildet eine Mantelfläche des Kegelstumpfes die sich konusförmig in Richtung Arbeitsende der Lötspitze verengenden Umfangsflächen von Außen- bzw. Innenkonus. Weiterhin werden Außen- und Innenkonus durch entsprechende Endkreisflächen des Kegelstumpfes mit kleinerem und größerem Durchmesser begrenzt Dabei ist selbstverständlich, daß die kleinere Endkreisfläche des Innenkonus eine Aufnahmeöffnung zum Einstecken der größeren Endkreisfläche des Außenkonus aufweist oder bildet und in der größeren Endkreisfläche des Innenkonus der im wesentliche zylindrische Aufnahmeabschnitt mündet.

Um das Zusammenwirken von Außen- und Innenkonus bei der Befestigung der Lötspitze weiterhin zu verbessern, können Höhe bzw. Tiefe von Außenkonus und Innenkonus im wesentlichen gleich sein.

Um die Herstellung des Außenkonus weiterhin zu vereinfachen, kann eine Rückseite des Außenkonus radial vom zylindrischen Abschnitt nach außen abstehen. Mehr Aufwand erfordert die Herstellung eines Außenkonus, bei dem dessen Rückseite in radialer Richtung geneigt zur Außenseite des zylindrischen Abschnitts verläuft.

Um den Innenkonus in einfacher Weise und mit möglichst geringem Materialaufwand herstellen zu können, kann der Innenkonus in einem Ringflansch ausgebildet sein, der dem im wesentlichen zylindrischen Aufnahmeabschnitt der Aufnahme in Richtung Lötspitze vorgeordnet ist. Auf diese Weise können zylindrische Aufnahmeabschnitt und Innenkonus in Bereichen der Aufnahme mit unterschiedlichen Außendurchmessern ausgebildet werden.

Um die Lötspitze in einfacher und sicherer Weise während ihres Verdrehens von der Einsteckstellung in die Befestigungsstellung zu lagern, können zylindrischer Abschnitt und Aufnahmeabschnitt im wesentlichen gleiche Durchmesser aufweisen. Auf diese Weise wird der zylindrische Aufnahmeabschnitt im wesentlichen als Widerlager eingesetzt, in dem der zylindrische Abschnitt des Einsteckendes der Lötspitze dreht, während der Außenkonus im Innenkonus von seiner Einsteckstellung in die Befestigungsstellung gedreht wird.

Es wäre ebenfalls möglich, daß die Durchmesser von Aufnahmeabschnitt und Abschnitt des Einsteckendes nur stellenweise im wesentlichen gleich sind und dieser Bereich der beiden Abschnitte als Wider- oder Drehlager dient.

Ähnlich wie bei der Rückseite des Außenkonus kann ein Innenkonusboden radial nach innen zum zylindrischen Aufnahmeabschnitt verlaufen. Dadurch wird die Herstellung des Innenkonus vereinfacht Es ist selbstverständlich, daß der Innenkonusboden analog zur Rückseite des Außenkonus ebenfalls in radialer Richtung geneigt zum zylindrischen Aufnahmeabschnitt verlaufen kann. In diesem Zusammenhang ist zu beachten, daß bei geneigter Rückseite und Innenkonusboden diese in Befestigungssteltung der Lötspitze beispielsweise eine größere gegenseitige Kontaktfläche aufweisen können als bei einem Verlauf radial nach innen.

Um eine gute Wärmeübertragung von einer Heizeinrichtung der Lötvorrichtung auf die Lötspitze mittels Wärmeleitung zu ermöglichen, können in der Befestigungsstellung der Lötspitze Außenkonus und Innenkonus teilweise und insbesondere im Bereich von der Rückseite des Außenkonus und dem Innenkonusboden in Anlage sein.

In Rahmen der Erfindung sind im Sinn des Begriffes Lötvorrichtung auch Entlötvorrichtungen zu verstehen, wobei in diesem Fall die Lötspitze mit einem Lötabsaugkanal ausgebildet ist. Dieser durchsetzt die Lötspitze in Längsrichtung und schließt an einen entsprechenden Kanal in der Aufnahme an. Durch die erfindungsgemäße Lötvorrichtung wird dabei eine vakuum- bzw. unterdruckdichte Verbindung zwischen Lötspitze und Aufnahme ermöglicht, wobei zwischen Außenkonus und Innenkonus und deren relativer Verdrehbarkeit eine ausreichende Kraft erzeugt wird, die beispielsweise die Rückseite des Außenkonus auf den Innenkonusboden aufdrückt. Durch diese Kraft und die feste Anlage von Rückseite des Außenkonus und Innenkonusboden wird gleichzeitig die Wärmeleitung zwischen Lötspitze und Aufnahme bzw. einer entsprechenden Heizeinrichtung verbessert.

Zur leichteren Handhabung der Lötspitze insbesondere auch zu deren Befestigung kann diese zwischen ihrem Arbeitsende und Einsteckende einen Kopfabschnitt mit Außensechskant aufweisen. Vorzugsweise erstreckt sich der Außenkonus bis zu einer radial nach außen verlaufenden Anlagefläche des Kopfabschnitts, so daß der Außenkonus direkt dem Kopfabschnitt folgt. Dadurch kann beispielsweise die Anlagefläche in der Befestigungsstellung der Lötspitze auf einem umlaufenden Außenrand des Ringflansches aufliegen und an diesem zur weiteren Abdichtung des Lötabsaugkanal und/oder zur Verbesserung der Wärmeübertragung angedrückt werden.

Um eine ausreichende Anlage zur noch verbesserten Abdichtung zwischen Lötspitze und Aufnahme zu erreichen, ist es in diesem Zusammenhang weiterhin als vorteilhaft zu betrachten, wenn die Anlagefläche weiter radial nach außen vorsteht als die Rückseite des Außenkonus. Dadurch erreicht man eine vergrößerte Auflagefläche zwischen Anlagefläche des Kopfabschnitts und umlaufenden Außenrand des Ringflansches.

Die Aufnahme kann direkt ein Teil der Lötvorrichtung sein, wobei sie beispielsweise in einer Spitzenhalterung angeordnet sein kann. Weiterhin kann die Aufnahme mit ihrem zylindrischen Aufnahmeabschnitt und dem Innenkonus bzw. Ringflansch als Innenbohrung in einer Aufnahmehülse ausgebildet sein. Diese Aufnahmehülse kann in üblicher Weise an der Lötvorrichtung befestigt werden, wie beispielsweise durch Verschrauben, mittels einer Spitzenhalterung oder dergleichen.

Die Aufnahmehülse kann außerdem relativ zur Lötvorrichtung drehbar ausgeführt sein, wobei die Aufnahme beziehungsweise das Anschlußende der Lötvorrichtung im wesentlichen innerhalb der Aufnahmehülse angeordnet sind. Durch Drehen der Aufnahmehülse greift dann der konische Exzenter in beispielsweise das Befestigungsende der Lötspitze ein und es wird eine Kraft bewirkt, die die Lötspitze an die Lötvorrichtung beziehungsweise, siehe im folgenden, an die Heizeinrichtung andrückt. Dabei können Lötspitze und Heizeinrichtung auch so ausgebildet sein, daß sie formschlüssig und gegen Verdrehen gesichert zusammenpassen und das Andrücken beider durch Drehen der Aufnahmehülse unter Zusammenwirkung von Innenkonus und Außenkonus erfolgt.

Weiter ist von Vorteil, wenn die Aufnahmehülse gleichzeitig einen Teil der Heizeinrichtung der Lötvorrichtung bildet. Dies kann beispielsweise dadurch erfolgen, daß direkt auf einer Außenseite der Aufnahmehülse eine Heizwicklung angeordnet ist. Weiterhin kann die Aufnahmehülse an ihrem der Lötspitze abgewandten Ende eine Einstecköffnung für eine Heizeinrichtung und/oder einen Temperatursensor aufweisen.

Entsprechend zum Außenkonus ist auch der Innenkonus exzentrisch zu dem ihm nachfolgenden zylindrischen Aufnahmeabschnitt angeordnet. Die Exzentrizitäten zwischen Außen- und Innenkonus und den jeweiligen zylindrischen Abschnitten können unterschiedlich in Größe und/oder Ausrichtung relativ zum zylinderischen Abschnitt sein. Für eine einfache Herstellung der Mittel zur Befestigung ist es von Vorteil, wenn Mittelachsen von Außenkonus und Innenkonus jeweils im gleichen Abstand zu den Mittel-achsen von zylindrischem Abschnitt und zylindrischem Aufnahmeabschnitt angeordnet sind. Dabei können die Mittelachsen von Außenkonus und Innenkonus kollinear sein.

Die vorangehend geschilderte Lötspitze kann nicht nur als Lötspitze für einen sogenannten Lötkolben, sondern auch als Düse einer Heißluftlötvorrichtung ausgebildet sein, durch welche Heißluft an die zu lötende oder entlötende Stelle geführt wird.

Bei einer solchen Düse einer Heißluftlötvorrichtung als Lötspitze kann die Düse wenigstens zwei koaxial angeordnete Längskanäle für Heißluft beziehungsweise für Unterdruck zum Abheben eines zu entlötenden Bauteils aufweisen, wodurch die Düse weiterhin in ihrem Aufbau vereinfacht ist. Durch die neuartige Befestigungsvorrichtung wird bei der Düse beispielsweise sichergestellt, daß die in der Düse ausgebildeten Längskanäle mit entsprechenden Längskanälen in der angeschlossenen Lötvorrichtung abgedichtet in Verbindung stehen.

Im folgenden wird ein vorteilhaftes Ausführungsbeispiel der Erfindung anhand der in der Zeichnung beigefügten Figuren näher erläutert und beschrieben.

Es zeigen:
- Fig. 1: eine teilweise geschnittene Seitenansicht einer Lötspitze der erfindungsgemäßen Lötvorrichtung;
- Fig. 2: eine seitliche Schnittansicht einer Aufnahmehülse als Teil der erfindungsgemäßen Lötvorrichtung, und
- Fig. 3: Lötspitze und Aufnahmehülse nach Fig. 1 und 2 in Befestigungsstellung.

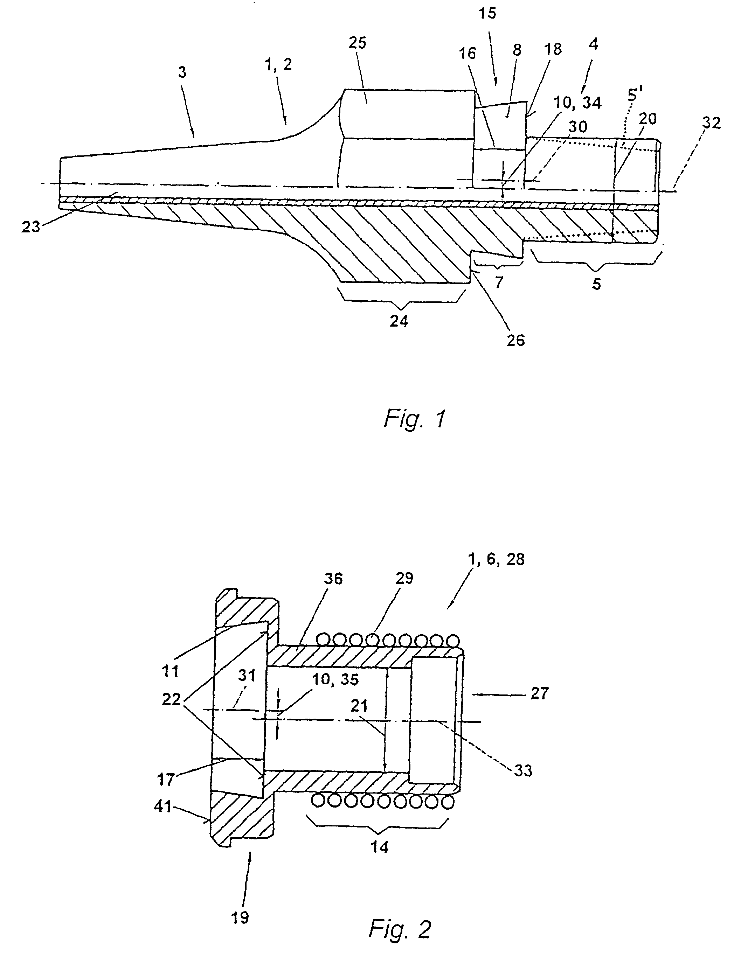

In Fig. 1 ist eine Seitenansicht einer Lötspitze 2 als Teil einer erfindungsgemäßen Lötvorrichtung 1 mit Mitteln zur Befestigung der Lötspitze dargestellt, die in ihrer unteren Hälfte geschnitten ist.

Die Lötspitze 2 weist ein Arbeitsende 3 und daran anschließend einen Kopfabschnitt 24, einen Konusabschnitt 7 und einen zylindrischen Abschnitt 5 auf.

Das Arbeitsende 3 erweitert sich in Richtung Kopfabschnitt 24 nach außen gekrümmt. Der Kopfabschnitt 24 ist auf seiner Außenseite mit einem Außensechskant 25 ausgebildet. Auf seiner dem Arbeitsende 3 gegenüberliegenden Seite weist der Kopfabschnitt 24 eine radial nach innen in Richtung zu einer Mittelachse 32 der Lötspitze 2 verlaufende Anlagefläche 26 auf. An dieser schließt sich der Konusabschnitt 7 an. Dieser ist als Außenkonus 8 oder Konusbund 15 ausgebildet, der sich konusförmig in Richtung Arbeitsende 3 verjüngt.

Der Außenkonus 8 weist die Form eines Kegelstumpfes auf, wobei seine Mittelachse 30 gegenüber der Mittelachse 32 der übrigen Lötspitze 2 in einem Abstand 34 oder mit Exzentrizität 10 angeordnet ist.

Der kegelstumpfförmige Außenkonus 8 weist auf seiner dem Kopfabschnitt 24 gegenüberliegenden Seite eine radial nach innen zum zylindrischen Abschnitt 5 verlaufende Rückseite 18 auf. Diese umgibt den zylindrischen Abschnitt 5 im wesentlichen als konzentrisch ausgebildeter Ring. Der zylindrische Abschnitt 5 ist mit einem Außendurchmesser 20 ausgebildet, wobei diesen Abschnitt wie die übrigen Abschnitte der Lötspitze 2 konzentrisch zur Mittelachse 32 ein Lötabsaugungskanal 23 durchsetzt.

Außenkonus 8 bzw. Konusbund 15 und zylindrischer Abschnitt 5 bilden ein Einsteckende 4 der Lötspitze 2.

In Fig. 1 ist weiterhin prinzipiell ein Ausführungsbeispiel der erfindungsgemäßen Lötvorrichtung mit Mitteln zur Befestigung der Lötspitze dargestellt, bei dem der Abschnitt 5' konisch verjüngt in Richtung Aufnahme 6, siehe Figur 2, ausgebildet ist. Ein entsprechend sich konisch in Richtung Lötspitze 2 erweiternder Aufnahmeabschnitt 14, siehe ebenfalls Figur 2, ist zur Vereinfachung nicht dargestellt.

In Fig. 2 ist eine seitliche Schnittansicht einer Aufnahmehülse 28 als Aufnahme 6 der erfindungsgemäßen Lötvorrichtung 1 mit Mitteln zur Befestigung der Lötspitze dargestellt.

Die Aufnahmehülse 28 weist einen zylindrischen Aufnahmeabschnitt 14 auf. Dieser ist zylinderförmig mit Zylindermantel 36 und Innendurchmesser 21. In Fig. 2 ist links am zylindrischen Aufnahmeabschnitt 14 ein Ringflansch 19 angeordnet, der radial über den Zylindermantel 36 nach außen vorsteht. Im Ringflansch 19 ist ein Innenkonus 11 ausgebildet, der sich in Richtung weg vom zylindrischen Aufnahmeabschnitt 14 konusförmig verjüngt. Der Innenkonus 11 ist exzentrisch zum zylindrischen Aufnahmeabschnitt 14 angeordnet, wobei eine Mittelachse 31 des Innenkonus 11 im Abstand 35 zu einer Mittelachse 33 des zylindrischen Abschnitt 14 oder mit Exzentrizität 10 angeordnet ist Der Innenkonus 11 weist eine Tiefe 17 auf, die im wesentlichen gleich einer Höhe 16 des Außenkonus 8, siehe Fig. 1, ist.

Auf seiner dem zylindrischen Aufnahmeabschnitt 14 zuweisende Unterseite weist der Innenkonus 11 einen Innenkonusboden 22 auf, der sich radial nach außen relativ zum zylindrischen Aufnahmeabschnitt 14 erstreckt.

An dem dem Ringflansch 19 gegenüberliegenden Ende weist der zylindrische Aufnahmeabschnitt 14 einen Bereich mit vergrößertem Durchmesser auf.

Innenkonus 11 und Inneres des zylindrischen Aufnahmeabschnitts 14 sind durch eine Innenbohrung 27 der Aufnahmehülse 28 gebildet. Auf dem Zylindermantel 36 des zylindrischen Aufnahmeabschnitts 14 kann eine Heizwicklung als Teil einer Heizeinrichtung 29 aufgewickelt sein.

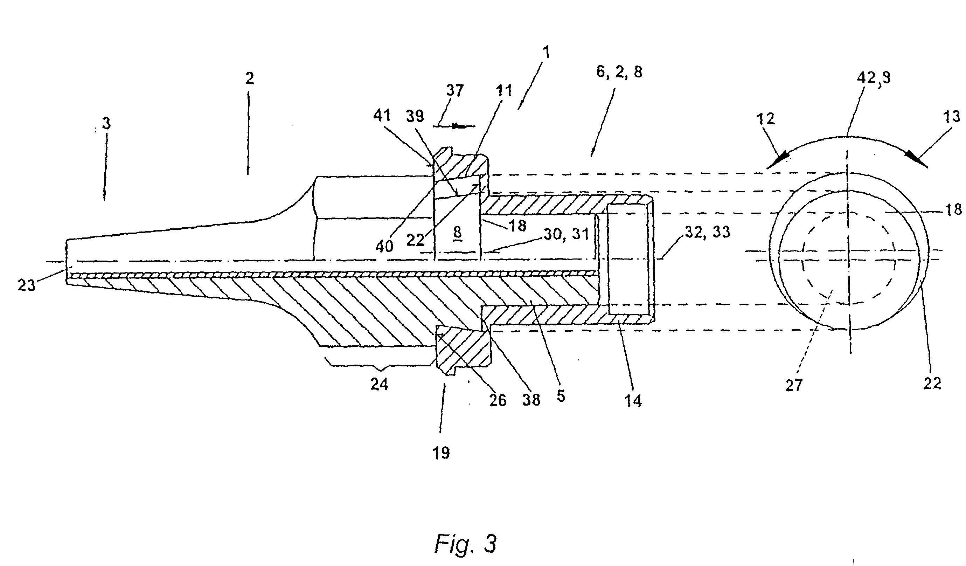

In Fig. 3 ist die Lötvorrichtung 1 mit Lötspitze 2 in Befestigungsstellung 13 dargestellt. Gleiche Bezugszeichen kennzeichnen gleiche Teile und werden nur noch teilweise erwähnt.

In der Befestigungsstellung 13, siehe im rechten Teil der Fig. 3 die Drehrichtung 42 zum Verdrehen der Lötspitze 2 zwischen Einsteckstellung 12 und Befestigungsstellung 13, ist der Außenkonus 8 im Innenkonus 11 angeordnet Dabei ist die Rückseite 18 des Außenkonus 8 mit dem Innenkonusboden 22 in Anlage. Weiterhin ist zumindest ein Abschnitt einer Außenkonusfläche 39 mit einer Innenkonusfläche 40 in Anlage. Durch diese miteinander in Anlage stehenden Flächen wird insbesondere im Bereich von Rückseite 18 und Innenkonusboden 22 ein Wärmeübergangsbereich 38 zwischen Aufnahmehülse 28 und der Lötspitze 2 gebildet.

Der zylindrische Abschnitt 5 des Einsteckendes 4, siehe Fig. 1 der Lötspitze 2 ist vollständig in den zylindrischen Aufnahmeabschnitt 14 der Aufnahmehülse 28 eingesteckt Dabei dient der zylindrische Abschnitt 14 als Drehlager für den zylindrischen Abschnitt 5 beim Verdrehen der Lötspitze 2 von Einsteckstellung 12 in Befestigungsstellung 13 des Einsteckendes 4 bzw. des Außenkonus 8.

In der Befestigungsstellung 13 ist weiterhin die Anlagefläche 26 des Kopfabschnitts 24 mit einer äußeren Randfläche 41 des Ringflansches 19 in Anlage.

In Fig. 3 ist weiterhin erkennbar, daß die Exzentrizität von Außenkonus und Innenkonus bezüglich des jeweiligen zylindrischen Abschnitt 5, 14 gleich ist, d.h. der Abstand zwischen den Mittelachsen 30, 31 und den Mittelachsen 32, 33 gleich ist.

Im rechten Teil der Fig. 3 ist weiterhin dargestellt, das beispielsweise die Rückseite 18 des Außenkonus 8 auf dem Innenkonusboden 22 aufliegt, wobei die entsprechende Auflagefläche nach innen durch die Innenbohrung 27 begrenzt ist.

## Patentansprüche

1. Lötvorrichtung (1) mit einen Lötspitze (2) und Mittels (5,7,8) zur Befestigung der Lötspitze (2) an dem Lötvorrichtung, wobei die Lötspitze (2) ein vorderes Arbeitsende (3) und ein diesem gegenüberliegendes, hinteres Befestigungsende (4) sowie die Lötvorrichtung ein Anschlußende (6) zur Befestigung des Befestigungsendes (4) aufweist, wobei an wenigstens einem Ende (4, 6) ein rotationssymmetrischer Abschnitt (5) angeordnet ist,
**dadurch gekennzeichnet, daß** ein Ende (4, 6) einen Konusabschnitt (7) aufweist, welcher mit einem zumindest stellenweise in Umfangsrichtung (9) angeordneten Außenkonus (8) ausgebildet ist, der exzentrisch zum rotationssymmetrischen Abschnitt (5) angeordnet ist, wobei das andere Ende (6, 4) mit einem Innenkonus (11) ausgebildet ist, in welchem der Außenkonus (8) zwischen einer Einsteckstellung (12) und einer Befestigungsstellung (13) drehbar gelagert ist.

2. Lötvorrichtung nach Anspruch 1,
**dadurch gekennzeichnet,**
**daß** der rotationssymmetrische Abschnitt im wesentlichen zylindrisch ist

3. Lötvorrichtung nach Anspruch 1 oder 2,
**dadurch gekennzeichnet, daß** das Befestigungsende (4) den zylindrischen Abschnitt (5) und den Außenkonus (8) aufweist, wobei sich der Außenkonus (8) konusförmig in Richtung Arbeitsende (3) verengt, und das Anschlußende (6) als Aufnahme zum Einstecken des Einsteckendes (4) und mit dem Innenkonus (11) ausgbildet ist, welcher sich konusförmig in Richtung Lötspitze (2) verengt.

4. Lötvorrichtung nach wenigstens einem der vorangehenden Ansprüche, wobei die Aufnahme (6) einen zum zylindrischen Abschnitt (5) der Lötspitze (2) komplementären zylindrischen Aufnahmeabschnitt (14) aufweist, **dadurch gekennzeichnet, daß** Außenkonus (8) bzw. Innenkonus (11) jeweils in Richtung Arbeitsende (3) vor dem zylindrischen Abschnitt (5) des Einsteckendes (4) und dem zylindrischen Aufnahmeabschnitt (14) der Aufnahmen (6) angeordnet sind.

5. Lötvorrichtung nach wenigstens einem der vorangehenden Ansprüche, **dadurch gekennzeichnet, daß** der im wesentlichen zylindrische Abschnitt (5) in Richtung Aufnahme (6) konisch zuläuft und der Aufnahmeabschnitt (14) entsprechend, insbesondere komplementär, ausgebildet ist.

6. Lötvorrichtung nach wenigstens einem der vorangehenden Ansprüche, **dadurch gekennzeichnet, daß** der.Außenkonus (8) des Einsteckendes (4) als in Umfangsrichtung (9) umlaufender Konusbund (15) ausgebildet ist.

7. Lötvorrichtung nach wenigstens einem der vorangehenden Ansprüche, **dadurch gekennzeichnet, daß** Innenkonus (11) und Außenkonus (8) entlang ihres Umfangs gleich in Richtung Arbeitsende (3) der Lötspitze (2) geneigt sind.

8. Lötvorrichtung nach wenigstens einem der vorangehenden Ansprüche, **dadurch gekennzeichnet, daß** Innenkonus (11) und Außenkonus (8) im wesentlichen kegelstumpfförmig ausgebildet sind.

9. Lötvorrichtung nach wenigstens einem der vorangehenden Ansprüche, **dadurch gekennzeichnet, daß** eine Höhe (16) bzw. ein Tiefe (17) von Außenkonus (8) und Innenkonus (11) im wesentlichen gleich sind.

10. Lötvorrichtung nach wenigstens einem der vorangehenden Ansprüche, **dadurch gekennzeichnet, daß** eine Rückseite (18) des Außenkonus (8) radial vom zylindrischen Abschnitt (5) nach außen absteht.

11. Lötvorrichtung nach wenigstens einem der vorangehenden Ansprüche, **dadurch gekennzeichnet, daß** der Innenkonus (11) in einem Ringflansch (19) ausgebildet ist, der dem zylindrischen Aufnahmeabschnitt (14) der Aufnahme (6) in Richtung Lötspitze (2) vorgeordnet ist.

12. Lötvorrichtung nach wenigstens einem der vorangehenden Ansprüche, **dadurch gekennzeichnet, daß** der zylindrische Abschnitt (5) und der zylindrische Aufnahmeabschnitt (14) vom Einsteckende (4) und der Aufnahme (6) im wesentlichen gleichen Außen- bzw. Innendurchmesser (20, 21) aufweisen.

13. Lötvorrichtung nach wenigstens einem der vorangehenden Ansprüche, **dadurch gekennzeichnet, daß** ein Innenkonusboden (22) radial nach innen zum zylindrischen Aufnahmeabschnitt (14) verläuft.

14. Lötvorrichtung nach wenigstens einem der vorangehenden Ansprüche, **dadurch gekennzeichnet, daß** in der Befestigungsstellung (13) der Lötspitze (2) Außenkonus (8) und Innenkonus (11) teilweise und insbesondere im Bereich der Rückseite (18) des Außenkonus (8) und des Innenkonusbodens (22) in Anlage sind.

15. Lötvorrichtung nach wenigstens einem der vorangehenden Ansprüche, **dadurch gekennzeichnet, daß** die Lötspitze (2) mit einem Lötabsaugkanal (23) ausgebildet ist.

16. Lötvorrichtung nach wenigstens einem der vorangehenden Ansprüche, **dadurch gekennzeichnet, daß** die Lötspitze (2) zwischen Arbeitsende (3) und Einsteckende (4) einen Kopfabschnitt (24) mit Außensechskant (25) aufweist, wobei der Außenkonus (8) sich bis zu einer radial nach außen verlaufenden Anlagefläche (26) des Kopfabschnitts (24) erstreckt.

17. Lötvorrichtung nach wenigstens einem der vorangehenden Ansprüche, **dadurch gekennzeichnet, daß** die Anlagefläche (26) des Kopfabschnitts (24) radial weiter nach außen vorsteht als die Rückseite (18) des Außenkonus (8).

18. Lötvorrichtung nach wenigstens einem der vorangehenden Ansprüche, **dadurch gekennzeichnet, daß** zylindrischer Aufnahmeabschnitt (14) und Innenkonus (11) der Aufnahme (6) durch eine Innenbohrung (27) in einer Aufnahmehülse (28) gebildet sind.

19. Lötvorrichtung nach wenigstens einem der vorangehenden Ansprüche, **dadurch gekennzeichnet, daß** die Aufnahmehülse (28) Teil einer Heizeinrichtung (29) des Lötkolbens ist.

20. Lötvorrichtung nach wenigstens einem der vorangehenden Ansprüche, **dadurch gekennzeichnet, daß** Mittelachsen (30, 31) von Außenkonus (8) und Innenkonus (11) jeweils im gleichen Abstand (34, 35) zu Mittelachsen (32, 33) von zylindrischem Abschnitt (5) und zylindrischem Aufnahmeabschnitt (14) angeordnet sind.

21. Lötvorrichtung nach wenigstens einem der vorangehenden Ansprüche, **dadurch gekennzeichnet, daß** die Lötspitze (2) als Düse einer Heißluftlötvorrichtung ausgebildet ist.

22. Lötvorrichtung nach wenigstens einem der vorangehenden Ansprüche, **dadurch gekennzeichnet, daß** die Düse (2) wenigstens zwei koaxial angeordnete Längskanäle für Heißluft beziehungsweise für Unterdruck zum Abheben eines zu entlötenden Bauteils aufweist.

## Claims

1. A soldering device (1) having a soldering tip (2) and means (5, 7, 8) for fixing the soldering tip (2) at the soldering device, wherein the soldering tip (2) comprises a front working end (3) and a rear fixing end (4) opposite the front working end, and wherein the soldering device comprises a joining end (5) for fixing the fixing end (4), wherein a rotation-symmetrical section (5) is arranged at least at one end (4, 5), **characterized in that** one end (4, 5) comprises a conical section (7), which is formed with an outer cone (8) arranged at least at certain portions in the circumferential direction, said outer cone being arranged eccentrically with respect to the rotational-symmetric section (5), wherein the other end (5, 4) is formed with an inner cone (11), in which the outer cone (8) is supported rotatable between an insertion position (12) and a fixing position (13).

2. A soldering device as claimed in claim 1, **characterized in that** the rotational-symmetric section is substantially cylindrical.

3. A soldering device as claimed in claim 1 or 2, **characterized in that** the fixing end (4) comprises the cylindrical section (5) and the outer cone (8), wherein the outer cone (8) tapers conically towards the working end (3), and the joining end (5) is formed as a receptacle for inserting the insertion end (4), and is formed with the inner cone (11), which tapers conically towards the soldering tip (2).

4. A soldering device as claimed in at least one of the preceding claims, wherein the receptacle (5) comprises a cylindrical receiving section (14) which is complementary to the cylindrical section (5) of the soldering tip (2), **characterized in that** the outer cone (8) and the inner cone (11) are arranged in the direction towards the working end (3) in front of the cylindrical section (5) of the insertion end (4) and the cylindrical receiving section (14) of the receptacles (5).

5. A soldering device as claimed in at least one of the preceding claims, **characterized in that** the substantially cylindrical section (5) tapers conically towards the receptacle, and the receiving section (14) is formed respectively, in particular complementary thereto.

6. A soldering device as claimed in at least one of the preceding claims, **characterized in that** the outer cone (8) of the insertion end (4) is formed as a conical collar (15) extending in the circumferential direction (9).

7. A soldering device as claimed in at least one of the preceding claims, **characterized in that** the inner cone (11) and the outer cone (8) are inclined along their circumference in the direction towards the working end (3) of the soldering tip (2).

8. A soldering device as claimed in at least one of the preceding claims, **characterized in that** the inner cone (11) and the outer cone (8) are substantially formed as truncated cones.

9. A soldering device as claimed in at least one of the preceding claims, **characterized in that** a height (15) and a depth (17) of outer cone (8) and inner cone (11) are substantially equal.

10. A soldering device as claimed in at least one of the preceding claims, **characterized in that** a rear side (18) of the outer cone (8) radially projects from the cylindrical section (5) towards the outside.

11. A soldering device as claimed in at least one of the preceding claims, **characterized in that** the inner cone (11) is formed in an annular flange (19) which is arranged in front of the cylindrical receiving section (14) of the receptacle (5) in the direction towards the soldering tip (2).

12. A soldering device as claimed in at least one of the preceding claims, **characterized in that** the cylindrical section (5) and the cylindrical receiving section (14) of the insertion end (4) and the receptacle (5) have substantially the same outer and inner diameter (20, 21).

13. A soldering device as claimed in at least one of the preceding claims, **characterized in that** an inner cone bottom (22) extends radially inwardly towards the cylindrical receiving section (14)

14. A soldering device as claimed in at least one of the preceding claims, **characterized in that** the outer cone (8) and inner cone (11) in the fixing position (13) of the soldering tip (2) are in abutment partially and in particular in the range of the rear end (18) of the outer cone (9) and of the inner cone bottom (22).

15. A soldering device as claimed in at least one of the preceding claims, **characterized in that** the soldering tip (2) is provided with a solder suction duct (23).

16. A soldering device as claimed in at lest one of the preceding claims, **characterized in that** the soldering tip (2) comprises a head section (24) with an outer hexagon between the working end (3) and the insertion end (4), wherein the outer cone (8) extends up to a radially outwardly extending abutment face (25) of the head section (24)

17. A soldering device as claimed in at least one of the preceding claims, **characterized in that** the abutment face (26) of the head section (24) projections radially outwardly to a greater extent than the rear side (18) of the outer cone (8).

18. A soldering device as claimed in at least one of the preceding claims, **characterized in that** the cylindrical receiving section (14) and the inner cone (11) of the receptacle (5) are formed by an inner bore (27) in a receiving sleeve (28)

19. A soldering device as claimed in at least one of the preceding claims, **characterized in that** the receiving sleeve (28) is part of a heating means (29) of the soldering iron.

20. A soldering device as claimed in at least one of the preceding claims, **characterized in that** central axes (30, 31) of outer cone (8) and inner cone (11) are arranged at equal spacing (34, 35) to the central axes (32, 33) of cylindrical section (5) and cylindrical receiving section (14).

21. A soldering device as claimed in at least one of the preceding claims, **characterized in that** the soldering tip (2) is formed as a nozzle of a hot-air soldering device.

22. A soldering device as claimed in at least one of the preceding claims, **characterized in that** the nozzle (2) comprises at least two coaxially arranged longitudinal ducts for hot air or for vacuum pressure for lifting a component to be unsoldered.

## Revendications

1. Dispositif de brasage (1) avec une pointe de brasage (2) et des moyens (5, 7, 8) pour la fixation d'une pointe de brasage (2) sur un dispositif de brasage, la pointe de brasage (2) présentant une extrémité de travail avant (3) et une extrémité de fixation arrière (4) placée à l'opposé de celle-ci, et le dispositif de brasage présentant une extrémité de raccordement (6) pour la fixation de l'extrémité de fixation (4), un tronçon (5), configuré selon une symétrie de rotation, étant disposé sur au moins une extrémité (4, 6),
**caractérisé en ce qu'**une extrémité (4, 6) présente un tronçon conique (7) réalisé avec un cône extérieur (8) disposé au moins par endroits en direction périphérique (9), qui est disposé excentriquement par rapport au tronçon (5) répondant à une symétrie de rotation, l'autre extrémité (6, 4) étant réalisée avec un cône intérieur (11) dans lequel le cône extérieur (8) est monté à rotation entre une position enfichée (12) et une position de fixation (13).

2. Dispositif de brasage selon la revendication 1, **caractérisé en ce que** le tronçon configuré suivant une symétrie de rotation est sensiblement cylindrique.

3. Dispositif de brasage selon la revendication 1 ou 2, **caractérisé en ce que** l'extrémité de fixation (4) présente le tronçon (5) cylindrique et le cône extérieur (8), le cône extérieur (8) allant en rétrécissant en forme de cône selon la direction de l'extrémité de travail (3) et l'extrémité de raccordement (6) étant réalisée sous la forme d'un logement pour l'enfichage de l'extrémité d'enfichage (4) et est réalisée avec le cône intérieur (11) qui va en rétrécissant en forme de cône, selon la direction de la pointe de brasage (2).

4. Dispositif de brasage selon au moins l'une des revendications précédentes, le logement (6) présentant un tronçon de logement (14) cylindrique, complémentaire du tronçon cylindrique (5) de la pointe de brasage (2), **caractérisé en ce que** le cône extérieur (8) ou le cône intérieur (11) sont disposé respectivement, dans la direction de l'extrémité de travail (3), devant le tronçon cylindrique (5) de l'extrémité d'enfichage (4) et le tronçon de logement (14) cylindrique des logements (6).

5. Dispositif de brasage selon au moins l'une des revendications précédentes, **caractérisé en ce que** le tronçon (5) sensiblement cylindrique a une allure conique en allant dans la direction du logement (6) et le tronçon de logement (14) est réalisé de manière correspondante, en particulier de façon complémentaire.

6. Dispositif de brasage selon au moins l'une des revendications précédentes, **caractérisé en ce que** le cône extérieur (8) de l'extrémité d'enfichage (4) est réalisé sous la forme d'une collerette conique (15) faisant le pourtour dans la direction périphérique (9).

7. Dispositif de brasage selon au moins l'une des revendications précédentes, **caractérisé en ce que** le cône intérieur (11) et le cône extérieur (8) sont inclinés le long de leur périphérie, également dans la direction de l'extrémité de travail (3) de la pointe de brasage (2).

8. Dispositif de brasage selon au moins l'une des revendications précédentes, **caractérisé en ce que** le cône intérieur (11) et le cône extérieur (8) sont réalisés sensiblement en troncs de cône.

9. Dispositif de brasage selon au moins l'une des revendications précédentes, **caractérisé en ce qu'**une hauteur (16) ou une profondeur (17) du cône extérieur (8) et du cône intérieur (11) sont sensiblement identiques.

10. Dispositif de brasage selon au moins l'une des revendications précédentes, **caractérisé en ce qu'**une face arrière (18) du cône extérieur (8) fait saillie vers l'extérieur depuis le tronçon cylindrique (5).

11. Dispositif de brasage selon au moins l'une des revendications précédentes, **caractérisé en ce que** le cône intérieur (11) est réalisé en une bride annulaire (19), disposée devant le tronçon de logement (14) cylindrique du logement (6) dans la direction de la pointe de brasage (2).

12. Dispositif de brasage selon au moins l'une des revendications précédentes, **caractérisé en ce que** le tronçon cylindrique (5) et le tronçon de logement cylindrique (14) de l'extrémité d'enfichage (4) et du logement (6) présentent des diamètres extérieur respectivement intérieur (20, 21) sensiblement identiques.

13. Dispositif de brasage selon au moins l'une des revendications précédentes, **caractérisé en ce qu'**un fond de cône intérieur (22) s'étend radialement vers l'intérieur en direction du tronçon de logement cylindrique (14).

14. Dispositif de brasage selon au moins l'une des revendications précédentes, **caractérisé en ce que**, à la position de fixation (13) de la pointe de brasage (2), le cône extérieur (8) et le cône intérieur (11) sont partiellement en appui et, en particulier, dans la zone de la face arrière (18) du cône extérieur (8) et du fond de cône intérieur (22).

15. Dispositif de brasage selon au moins l'une des revendications précédentes, **caractérisé en ce que** la pointe de brasage (2) est réalisée avec un canal d'aspiration de brasure (23).

16. Dispositif de brasage selon au moins l'une des revendications précédentes, **caractérisé en ce que**, entre l'extrémité de travail (3) et l'extrémité d'enfichage (4), la pointe de brasage (2) présente un tronçon de tête (24) ayant un six-pans extérieur (27), le cône extérieur (8) s'étendant jusqu'à une face d'appui (26), s'étendant radialement vers l'extérieur, du tronçon de tête (24).

17. Dispositif de brasage selon au moins l'une des revendications précédentes, **caractérisé en ce que** la face d'appui (26) du tronçon de tête (24) fait saillie radialement vers l'extérieur plus fortement que la face arrière (18) du cône extérieur (8).

18. Dispositif de brasage selon au moins l'une des revendications précédentes, **caractérisé en ce que** le tronçon de logement (14) cylindrique et le cône intérieur (11) du logement (6) sont formés par un perçage intérieur (27) ménagé dans une douille de logement (28).

19. Dispositif de brasage selon au moins l'une des revendications précédentes, **caractérisé en ce que** la douille de logement (28) fait partie d'un dispositif de chauffage (29) du piston de brasage.

20. Dispositif de brasage selon au moins l'une des revendications précédentes, **caractérisé en ce que** les axes médians (30, 31) du cône extérieur (8) et du cône intérieur (11) sont chacun disposés selon le même espacement (34, 35) par rapport aux axes médians (32, 33) du tronçon cylindrique (5) et du tronçon de logement cylindrique (14).

21. Dispositif de brasage selon au moins l'une des revendications précédentes, **caractérisé en ce que** la pointe de brasage (2) est réalisée sous la forme de pointe de brasage d'un dispositif de brasage à l'air chaud.

22. Dispositif de brasage selon au moins l'une des revendications précédentes, **caractérisé en ce que** la pointe de brasage (2) présente au moins deux canaux longitudinaux coaxiaux, pour de l'air chaud, respectivement pour un vide, afin de soulever un composant à débraser.
